# FASCICULE DE BREVET EUROPEEN

(11) **EP 1 889 044 B1**
(45) Date de publication et mention de la délivrance du brevet: **27.10.2010**
(21) Numéro de dépôt: 06755303.2
(22) Date de dépôt: 24.05.2006
(51) Int. Cl.: G01N 27/414

(54) **RESEAU DE TRANSISTORS FET A NANOTUBE OU NANOFIL SEMI-CONDUCTEUR ET DISPOSITIF ELECTRONIQUE CORRESPONDANT, POUR LA DETECTION D'ANALYTES**
FET-TRANSISTORNETZWERK AUF BASIS VON HALBLEITENDEN NANORÖHRCHEN ODER NANODRÄHTEN UND ENTSPRECHENDE ELEKTRONISCHE VORRICHTUNG ZUM NACHWEIS VON ANALYTEN
SEMICONDUCTOR NANOTUBE OR NANOWIRE FET TRANSISTOR NETWORK AND CORRESPONDING ELECTRONIC DEVICE, FOR DETECTING ANALYTES

(30) Priorité: 31.05.2005 FR 0505492
(43) Date de publication de la demande: 20.02.2008
(73) Titulaire: THALES, 92200 Neuilly sur Seine (FR); Ecole Polytechnique, 91128 Palaiseau Cedex (FR)
(72) Inventeur: BONDAVALLI, Paolo, F-75014 Paris (FR); LEGAGNEUX, Pierre, F-78320 Le Mesnil Saint Denis (FR); LE BARNY, Pierre, F-91400 Orsay (FR); PRIBAT, Didier, F-92310 Sevres (FR); NAGLE, Julien, F-91120 Palaiseau (FR)
(74) Mandataire: Esselin, Sophie
(86) Numéro de dépôt international: PCT/EP2006/062615
(87) Numéro de publication internationale: WO 2006/128828

(56) Documents cités:
- WO-A-2005/048350
- DE-A1- 10 331 299
- US-A1- 2003 089 899
- US-A1- 2004 001 778
- US-A1- 2005 053 525

## Description

La présente invention concerne les capteurs utilisés pour la détection d'analytes, dans un environnement gazeux ou liquide, et qui utilisent comme transducteur, un ou des éléments de type nanotube semi-conducteur ou de type nanofil semi-conducteur.

On rappelle qu'une différence entre un nanotube et un nanofil est que le premier est creux et l'autre plein. Ce sont des éléments de diamètre équivalent, de l'ordre du nanomètre ou de quelques nanomètres. Leur diamètre est petit devant leur longueur.

L'invention s'applique à la détection d'espèces particulières présentes dans un milieu spécifique, tel qu'un milieu urbain (métro par exemple), industriel (salle de laboratoire), un milieu liquide (détection biochimique).... Les analytes détectés peuvent être des espèces chimiques ou biologiques particulières, protéines, enzymes, ou autres, que l'on veut généralement détecter pour leur nocivité (virus, gaz toxique....).

A titre d'exemple, dans de nombreux domaines de l'industrie (agro-alimentaire, pharmacie...), dans le domaine de la sécurité et de la prévention industrielle, civile (pollution domestique) et dans le domaine militaire, des capteurs sont utilisés pour permettre la détection d'une concentration anormale d'analytes déterminés dans le milieu sous observation, afin d'en prévenir les effets dangereux, par exemple l'explosion, l'empoisonnement, ou la contamination. Dans le domaine biologique, il s'agira par exemple de détecter certaines toxines qui se révèlent dangereuses, telles certaines toxines bactériennes comme le bacille du charbon ou les toxines botuliques, ou certains virus, comme par exemple la variole, la grippe... Dans le domaine chimique, il s'agira par exemple de détecter certains dérivés organophosphorés (sarin, tabun...) et du TNT dont la dangerosité est bien connue.

A ces fins, des capteurs chimiques ou des biocapteurs sont utilisés. Un capteur biochimique est un système qui utilise des réactions chimiques pour détecter un analyte. Il crée un lien entre l'élément de reconnaissance chimique, qui réagit avec l'analyte, et un transducteur qui relie cette reconnaissance chimique à un signal physique utile, et transforme ce signal physique en un signal électrique.

Il est connu d'utiliser des nanotubes semi-conducteurs comme transducteurs, des nanotubes de carbone par exemple, dans le but de détecter des analytes particuliers. On a en effet pu montrer que les propriétés de conduction électrique des nanotubes semi-conducteurs sont très sensibles à l'environnement de ces nanotubes. Plus particulièrement, l'adsorption en surface par un nanotube, de molécules présentes en solution ou de molécules gazeuses, entraîne une variation significative de ses propriétés électriques.

Des capteurs à base de nanotubes semi-conducteur ont notamment été développés et en particulier, des capteurs qui utilisent comme élément de détection électronique, un transistor à effet de champ à nanotube. Ces transistors sont habituellement désignés par l'acronyme NTFET. Le canal est formé par un ou plusieurs nanotubes (réseau 2D de nanotubes, ...), par exemple un ou des nanotubes de carbone de type semi-conducteur. Il s'agit en général de nanotubes de carbone du type à simple paroi (SWNT *Single Wall Nanotube*).

Les capteurs utilisant ces transistors ont révélé une grande sensibilité. Cependant, ils souffrent d'un manque de sélectivité, qui limite leur capacité à identifier un analyte spécifique dans un mélange. Par exemple, il leur est difficile de reconnaître une molécule de gaz dans un mélange gazeux, ou d'une protéine spécifique dans un mélange en solution. Le problème est accentué si la composition du mélange varie dans le temps. Cela peut être le cas par exemple en milieu urbain, dans un métro par exemple. En effet, l'utilisation par les équipes de nettoyage de produits qui émettent des effluents gazeux particuliers, va agir temporairement sur la composition du milieu. Le changement de temps peut aussi induire plus ou moins d'humidité et modifier ainsi la composition de l'atmosphère. Si on dispose dans un tel milieu urbain, un détecteur d'un gaz dangereux tel que du sarin, la détection de ce gaz ne doit pas être perturbée par des évolutions normales des différentes conditions atmosphériques, dues à des modifications d'ordre météorologique, ou dues à des interventions humaines : nettoyage, diffuseur de parfum d'ambiance.....

S'agissant de la reconnaissance de protéines, le problème de la sélectivité est accentué par le phénomène dit de NSB (pour *Non Selective Binding*) qui est lié à l'accrochage des molécules protéiniques aux nanotubes de carbone en raison de leur caractère hydrophobe, indépendamment de leur origine et qui entraîne un changement irréversible de la réponse du biocapteur.

Pour améliorer la sélectivité des capteurs à base de nanotubes de carbone, et en particulier à base de transistors NTFET, il est connu de fonctionnaliser le nanotube. Selon l'état de la technique, la fonctionnalisation du nanotube de carbone consiste en l'adsorption ou l'accrochage de molécules à sa surface, par exemple déposées par pulvérisation de gouttelettes. Une telle fonctionnalisation améliore la sélectivité du capteur en agissant comme catalyseur, et permet la détection d'un analyte déterminé, plutôt qu'un autre.

Notamment dans l'article de Shu Peng et al, "Towards large arrays of multiplex functionalized carbon nanotube sensors" (Nano Letters vol.3, n°3, 347-351, 2003), on montre qu'en fonctionnalisant le nanotube d'un transistor avec une couche de polymère approprié, on peut accentuer l'effet de l'interaction entre les gaz et les nanotubes de carbone : on peut rendre le transistor plus sensible à une espèce gazeuse spécifique. De plus, la couche de polymère déposée sur un nanotube peut rendre ce dernier non-sensible à l'interaction avec une espèce gazeuse. L'article donne un exemple, avec la fonctionnalisation d'un nanotube avec une couche de polyéthylèneimine : le transistor devient très sensible à la présence de dioxyde d'azote (NO2), mais insensible à la présence d'ammoniaque (NH₃). A l'inverse, la fonctionnalisation du nanotube avec une couche de Nafion®, qui est un dérivé du Teflon®, entraîne que le transistor devient très sensible à la présence d'ammoniaque (NH₃), mais insensible à la présence de dioxyde d'azote (NO2). Les auteurs suggèrent ainsi la possibilité de réaliser des détecteurs moléculaires sensibles et sélectifs sur ce principe, en utilisant des réseaux de transistors FET fonctionnalisés de façon spécifique.

US 2003/089899 A1 décrit un réseau de transistors à effet de champ pour la détection d'analytes, chaque transistors comprenant un canal à base d'un nanotube ou nanofil fonctionnalisé, le canal comprenant des zone de dopages différents.

Toutefois, s'agissant de reconnaître un gaz ou une espèce gazeuse, ces techniques présentent des désavantages liés à la sélectivité à l'intérieur d'une même famille de gaz. En effet, un gaz spécifique peut être ou *donneur* ou *accepteur* selon la manière dont il agit sur la conductivité du nanotube. Selon les mesures effectuées, deux gaz avec le même caractère (donneur ou accepteur) peuvent induire le même effet si le système de détection n'est pas opportunément conçu. Ce problème est accentué par l'évolution en temps réel de ce mélange pour des applications notamment en milieu urbain.

Dans le domaine de la détection d'espèces biochimiques ou bactériologiques, la fonctionnalisation des nanotubes est fondamentale pour la reconnaissance de molécules protéiniques, pour s'affranchir du problème de NSB (*Non-Selective-Binding*) déjà vu, qui a pour effet que les molécules des protéines ont tendance à s'accrocher aux parois du nanotube en raison de leur caractère hydrophobe. Ce phénomène change définitivement la réponse du transistor. Le même transistor, s'il n'est pas fonctionnalisé, ne peut alors être réutilisé plusieurs fois pour la détection de protéines. De plus, il ne permet pas d'obtenir un résultat reproductible dans le cas d'un mélange de plusieurs molécules. La fonctionnalisation a alors comme fonction d'agir comme inhibiteur de la réaction de certaines protéines avec le nanotube, pour permettre la réaction d'autres protéines qui en interagissant avec le nanotube vont changer les caractéristiques du transistor, et donc permettre leur détection.

Il est par ailleurs connu de fonctionnaliser un nanotube de carbone du type à simple paroi (SWNT) par l'accrochage à sa surface, par des procédés adaptés, de molécules organiques covalentes ou non-covalentes. On a alors une couche sensible sur le nanotube, qui favorise l'immobilisation d'une autre molécule que l'on souhaite détecter, telle qu'une protéine, une substance biochimique particulière, ou autres.... Cette immobilisation conduit a une modification des propriétés électriques du nanotube, qui permet la détection de la présence de la molécule immobilisée. Une telle fonctionnalisation est par exemple décrite dans l'article de R.Chen et al., "Noncovalent functionalization of carbon nanotubes for highly specific electronic biosensors " (4984-4989 PNAS April 29 2003, vol.100, n°9) et dans la demande de brevet internationale publiée sous le numéro WO 02/095099.

Ainsi, il est connu dans l'état de l'art de fonctionnaliser des nanotubes de transistors FET, par des polymères ou autres substances biochimiques, organiques,... afin d'améliorer leur sensibilité et/ou leur sélectivité, et favoriser la détection de molécules gazeuses, de protéines....

Ces techniques à base de transistors à nanotubes fonctionnalisés avec des polymères permettent d'atteindre des résultats intéressants en terme de sensibilité (quelques ppbs).

Dans l'invention, on cherche à obtenir un capteur à la fois compact, sensible, rapide et fiable, qui permette un fonctionnement en temps réel dans un environnement urbain, et à température ambiante.

Dans l'invention, on cherche un capteur qui ne pose pas de problème de maintenance.

Les techniques de fonctionnalisation indiquées jusqu'à présent ne répondent pas de façon satisfaisante à ces besoins.

L'invention a pour objet un détecteur électronique dont la sensibilité, la sélectivité et le temps de réponse sont améliorées de façon significative, permettant une utilisation pour la détection d'analytes particuliers dans des milieux plus ou moins complexes et variables dans le temps.

Dans l'invention, on s'intéresse plus particulièrement à des transistors FET à configuration latérale, à grille arrière, dont le canal est réalisé par un élément nanotube semi-conducteur (par exemple nanotube de carbone), ou par un nanofil semiconducteur (par exemple nanofil(s) de silicium). La détection s'opère par l'exposition d'une partie au moins de la surface de la jonction source/canal et/ou de la jonction drain/canal, au milieu dans lequel on réalise la détection.

Dans l'invention, on a pu mettre en évidence que selon le matériau conducteur employé pour réaliser les électrodes source et drain d'un transistor, la réponse en courant du transistor en fonction de la tension appliquée entre grille et source [I_{ds}=f(V_{gs})] est différente en fonction du milieu auquel la surface de jonction est exposée. Plus particulièrement, le seuil de tension de grille à partir duquel le transistor va être conducteur, varie selon les molécules présentes dans le milieu auquel le transistor est exposé, et en fonction du métal d'électrode employé. Cette variation n'est pas linéaire.

Selon l'invention, on exploite ce phénomène comme technique de différentiation des transistors. Deux transistors sont ainsi différenciés par la sélection d'un matériau conducteur d'électrodes source/drain différent pour chaque transistor, en sorte que les propriétés électriques de leurs jonctions électrode/canal sont différentes. Les deux transistors ainsi différenciés ont une tension de seuil différente, qui est aussi fonction des molécules en présence dans le milieu. La tension de seuil varie en fonction du type de jonction et donc en fonction du matériau conducteur utilisé pour réaliser les électrodes source/drain, et en fonction des molécules auxquelles les jonctions sont exposées. Aussi, en fonction de la tension entre grille et source que l'on applique aux deux transistors, et selon le milieu auquel les jonctions sont exposées, un ou les deux transistors sont conducteurs (état on), ou un ou les deux transistors sont non conducteurs ou bloqués (état off). On rappelle que l'état "on" ou "off" d'un transistor se détecte de façon habituelle par la mesure du courant de drain du transistor, noté généralement i_{ds}.

Une telle différentiation permet de réaliser ainsi une empreinte spécifique de la composition moléculaire du milieu considéré. En utilisant un réseau de transistors différenciés, comprenant au moins deux transistors différenciés, mais idéalement, un grand nombre, la valeur de la tension de seuil de chacun des transistors du réseau est un élément de cette empreinte. On comprend que si dans un milieu complexe, une molécule spécifique fait son apparition, l'empreinte du milieu va être modifiée : des tensions de seuil vont changer. De cette façon, on va détecter cette intrusion. En outre, une mesure de la concentration est donnée par la pente de la courbe de mesure du courant de drain (I_{ds}) en fonction de la tension appliquée entre grille et source, Vₐₛ.

L'idée est ainsi d'utiliser un réseau de transistors FET dont le canal est réalisé par un élément nanotube ou nanofil de type semi-conducteur, comprenant au moins deux transistors, dans lequel au moins deux transistors sont différenciés par le matériau conducteur utilisé pour réaliser l'électrode source et/ou drain, et de mesurer, en continu ou en séquence, la tension de seuil de chacun des transistors du réseau, pour mettre à jour une matrice d'états de conduction des transistors du réseau. Dans cette matrice, un état de conduction d'un transistor est défini par sa tension de seuil. Cette matrice d'état mise à jour continuellement est comparée à des empreintes du milieu, définissant une ou des compositions normales de ce milieu, dans le but de détecter tout changement, et de générer une alarme correspondante.

Un dispositif électronique comprenant un réseau selon l'invention est à la fois sensible, sélectif et réagit très vite. Il est compatible avec des applications de détection/surveillance de milieux en temps réel.

Notamment, il permet de réaliser en temps réel une empreinte précise des caractéristiques d'un milieu, en fonction des états de conduction des différents transistors qui composent le réseau sensible. La comparaison de cette empreinte à une ou des empreintes de référence, typiquement obtenues par étalonnage, permet de reconnaître l'intrusion d'un analyte déterminé dans ce milieu.

Cette détection est très sensible, c'est à dire qu'elle permet de détecter la présence d'un analyte en très faible concentration, de l'ordre du ppb. On montre qu'en faisant un choix judicieux des métaux de différentiation, elle est aussi très sélective. Un dispositif électronique de détection selon l'invention permet ainsi la détection de façon très sûre de la présence d'un analyte particulier, par exemple du sarin dans une ambiance urbaine : le dispositif est capable de détecter cet analyte même à très faible concentration (le sarin est nocif même à très faible concentration) et avec un taux de fausse alarme très faible. Il s'applique à tout domaine nécessitant une surveillance, soit continue, soit activée en cas d'alerte. Ce peut être aussi bien une surveillance en milieu industriel, tel qu'une raffinerie, une surveillance de la qualité d'un réseau de distribution de gaz naturel, pour en vérifier à tout moment la composition.

Un dispositif électronique de détection utilisant un réseau de transistors selon l'invention peut être obtenu par différents procédés utilisant tous des techniques éprouvées de fabrication de transistors à semiconducteurs et nanotubes, de dispositifs courants de commande en tension et lecture du courant des transistors, et de moyens de traitement des données. Il est simple à réaliser et peut être très compact. Il peut notamment être réalisé sous forme portable.

Le dispositif peut être amélioré, notamment en vue de la détection dans des milieux liquides ou très humides, en fonctionnalisant les nanotubes avec des polymères sélectionnés de manière appropriée, notamment pour empêcher l'effet de NSB. Une alternative à la fonctionnalisation par des polymères, dans le cas d'une utilisation dans un milieu qui peut être très humide (mais non pas liquide), par exemple dans les régions à mousson ou tropicales, est d'utiliser le dispositif dans un mode de fonctionnement à chaud, par exemple à une température de fonctionnement de l'ordre de 100°C à 200°C, ce qui peut être obtenu par un dispositif de chauffage approprié. De cette façon, on "assèche" le milieu de détection localement, au moins dans la zone de détection du dispositif, ce qui permet de résoudre le problème de parasitage des mesures en fonction de l'humidité.

Un dispositif électronique de détection selon l'invention offre de nombreux avantages. Notamment, il permet de réaliser une « empreinte » très précise des caractéristiques d'un gaz ou d'une bactérie, et de détecter cette empreinte au moyen d'un dispositif très compact et très sensible, avec un temps de réponse très réduit, ce qui est un besoin fondamental pour des détecteurs d'armes de combat.

Telle que revendiquée, l'invention concerne donc un réseau de transistors pour la détection d'analytes, chaque transistor du réseau comprenant une grille, une électrode source et une électrode drain, lesdites électrodes étant formées dans un matériau conducteur et un élément semi-conducteur nanotube ou nanofil formant un canal du transistor, ledit élément étant connecté à une extrémité à l'électrode source, et à une autre extrémité à l'électrode drain, ladite électrode source, respectivement ladite électrode drain, formant avec le canal une première jonction, respectivement une deuxième jonction, **caractérisé en ce que** ledit réseau comprend au moins deux transistors différenciés par un matériau conducteur d'électrode source et/ou drain différent, lesdits transistors comprenant chacun une zone exposée de détection comprenant une ou les deux jonctions parmi la première et la deuxième.

L'invention concerne aussi un dispositif électronique de détection d'analytes, comprenant un tel réseau.

D'autres avantages et caractéristiques de l'invention sont détaillées dans la description suivante, faite à titre indicatif et non limitatif de l'invention, en référence aux dessins annexés dans lesquels :
- les figures 1a et 1b représentent chacune une structure de transistor NTFET qui peut être utilisée dans l'invention;
- les figures 2a à 2d représentent une configuration d'un réseau de transistors différenciés selon l'invention, en vue de dessus (Figs.2a et 2c) et en coupe le long de la colonne Col1 (Fig.2b, 2d);
- la figure 3 représente une autre configuration d'un réseau différencié selon l'invention;
- la figure 4a illustre en vue de dessus une autre configuration d'un réseau selon l'invention, comprenant un assemblage de différents substrats;
- la figure 4b illustre en vue de dessus, une variante d'assemblage des substrats et une fonctionnalisation par des polymères des transistors du réseau;
- les figures 4c et 4d sont des vues en coupe correspondantes des figures 4a et 4b;
- la figure 5 illustre un mode de réalisation de la connexion de grille, pour amener la tension de commande nécessaire;
- la figure 6 est un schéma-bloc d'un dispositif électronique de détection d'analytes comprenant un réseau selon l'invention; ;
- les figures 7a et 7b illustrent un réseau matriciel R de transistors différenciés et/ou fonctionnalisés selon l'invention et une matrice M_{EC} d'états de conduction mesurés pour ce réseau;
- les figures 8a et 8b illustrent une mode de réalisation de différentiation des transistors par la surface de contact entre les deux matériaux des jonctions et
- la figure 9 illustre une variante de réalisation de cette différentiation par la surface de contact.

L'invention concerne un réseau de transistors pour la détection d'analytes. Dans ces transistors, un élément semi-conducteur nanotube ou nanofil NT forme le canal du transistor.

L'élément semi-conducteur est connectée à ses deux extrémités à une électrode source et à une électrode drain. Ces deux électrodes sont réalisées dans un matériau conducteur, typiquement du métal. On a ainsi pour chaque transistor, une jonction source/canal et une jonction drain/canal.

Selon l'invention, on exploite les modifications des propriétés électriques d'au moins une des jonctions source/canal ou drain/canal du transistor, dont la surface ou une partie au moins est exposée à un analyte à détecter. Il s'agit de préférence d'au moins la jonction source/canal.

Le transistor utilisé doit donc avoir une structure telle qu'au moins une jonction avec le canal, et de préférence la jonction associée à l'électrode source, soit exposée au milieu soumis à la détection. Le transistor est ainsi prévu avec une zone exposée de détection comprenant une ou les deux jonctions, qui sont ainsi mises en condition de réagir avec un environnement, qui peut être liquide ou gazeux.

Dans la suite, dans le but de simplifier l'exposé, l'invention est décrite pour un transistor à nanotube semi-conducteur (par exemple nanotube de carbone semi-conducteur).

Les mêmes propriétés et les mêmes effets peuvent être obtenus en utilisant à la place du ou des nanotubes, un ou des nanofils semi-conducteurs, ce qui constitue une variante de l'invention. La description ci-après peut s'appliquer de façon équivalente à cette variante en remplaçant "nanotube(s) de carbone" ou "nanotube(s)" par nanofil(s).

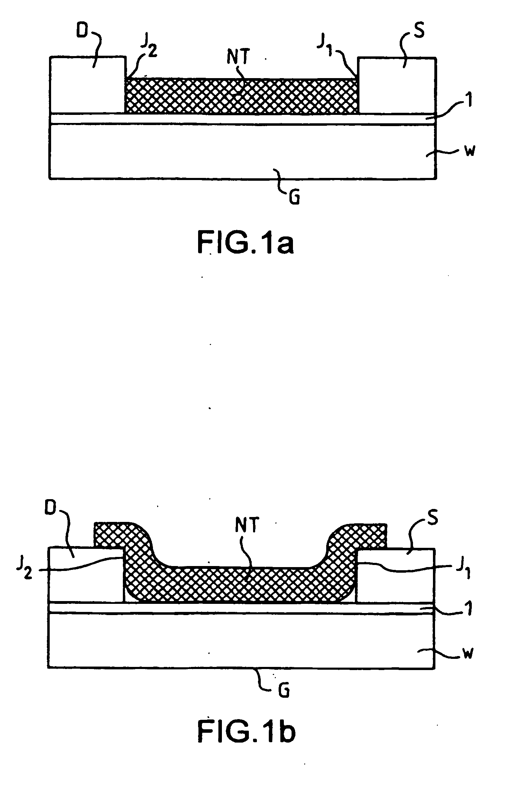

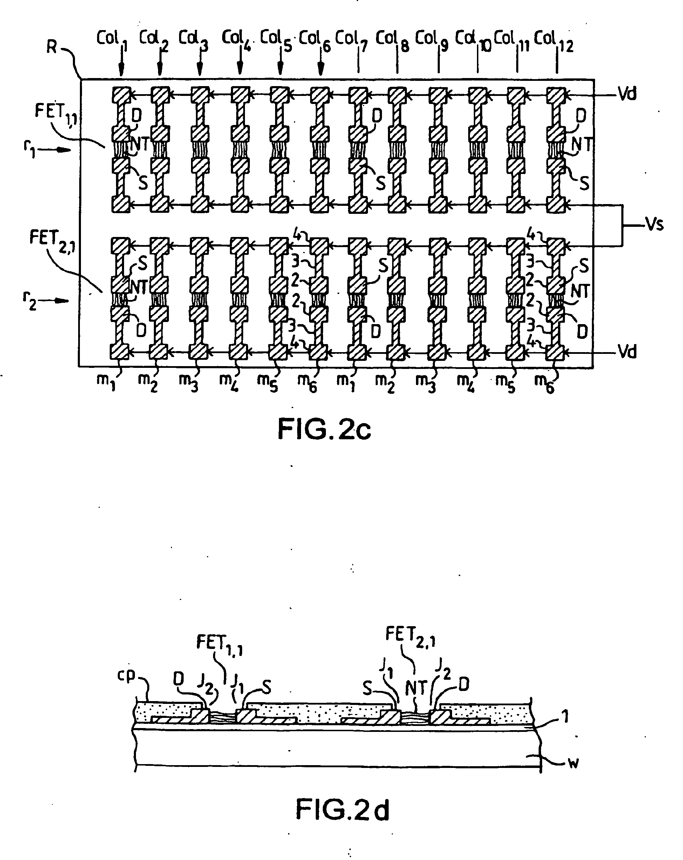

Une structure d'un transistor qui répond à une utilisation selon l'invention est illustrée sur les figures 1 a et 1 b, dans un exemple de configuration latérale. En particulier, le canal est formé par un élément nanotube semi-conducteur. Le transistor est à grille arrière, en sorte que l'élément nanotube et les électrodes source et drain disposées sur la face active, peuvent être exposée au milieu dans lequel on souhaite effectuer une surveillance. Comme illustré sur la figure 2d, les parties de la face active qui n'ont pas à être exposées sont protégées de façon habituelle dans la technologie de fabrication de transistors FET, par au moins une couche de passivation cp. Cette couche de passivation comporte des ouvertures correspondant aux surfaces exposées libres du réseau, c'est à dire les zones exposée de détection des transistors, par lesquelles la détection d'analytes va se faire.

De manière plus détaillée, un transistor FET comprend une grille G, une électrode source S, une électrode drain D et un élément nanotube semi-conducteur NT qui joint les deux électrodes source et drain et forme le canal du transistor. L'électrode source forme avec le canal une première jonction J₁. L'électrode drain forme avec le canal une deuxième jonction J₂.

Dans l'exemple illustré sur les figures 1a et 1b, la grille G du transistor est du type grille arrière ("*back gate transistor*", dans la littérature anglosaxone), et formée par un substrat semi-conducteur w. Une couche de diélectrique 1 est prévue sur la grille G.

L'élément nanotube NT est disposé sur cette couche de diélectrique 1. Dans l'exemple, il est formé d'un unique nanotube.

L'élément nanotube NT peut en pratique être formé d'un nanotube ou de plusieurs nanotubes. Dans ce dernier cas les nanotubes peuvent être organisés en parallèle selon un réseau 2D, ou être chaînés en série. L'expression élément nanotube utilisée dans la présente description couvre toutes ces variantes de réalisation pratique.

Deux électrodes conductrices réalisées sur la couche de diélectrique 1 sont disposées de part et d'autre de l'élément nanotube NT. L'une forme le drain D du transistor et l'autre la source S. Ce sont par exemple des plots de métal, en forme de mésa, obtenus par dépôt d'une couche de métal, puis gravure. Dans un autre exemple, ce sont des nanofils de matériaux conducteurs, qui sont déposés de manière appropriée.

Chacune des électrodes S et D est connectée à une extrémité de l'élément nanotube, de manière à former à chaque extrémité une jonction avec le canal : la jonction J₁ avec l'électrode source, et la jonction J₂ avec l'électrode drain.

Le contact entre chacune des électrodes et une extrémité de l'élément nanotube NT peut en pratique être obtenu selon deux modes de réalisation différents, selon principalement que l'on dépose l'élément nanotube avant ou après les électrodes.

C'est ce qui est illustré ci-après en prenant l'exemple d'électrodes formées par des plots de métal.

Dans un premier mode de réalisation illustré sur la figure 1a, les électrodes sont réalisées après avoir déposé l'élément nanotube NT sur la couche de diélectrique 1. Par exemple, les électrodes sont réalisées par dépôt puis gravure auto-alignée sur l'élément nanotube, en sorte que les jonctions de l'élément nanotube avec les. électrodes se font dans le plan de l'élément nanotube. C'est la variante illustrée sur la figure 1 a. La surface de contact entre les deux matériaux formant la jonction, est essentiellement définie par la surface du nanotube recouverte par le métal.

Dans un deuxième mode de réalisation illustré sur la figure 1b, les électrodes source S et drain D sont réalisées sur la couche de diélectrique 1 (par dépôt puis gravure). Ensuite l'élément nanotube NT est déposé, en venant recouvrir en partie les mesas des électrodes. Dans ce cas, la surface de contact entre les deux matériaux formant chaque jonction (métal/nanotube) est principalement la surface du plan supérieur et du flanc de la mésa en contact avec l'élément nanotube. C'est la variante illustrée sur la figure 1 b.

Dans le cas où l'élément nanotube est formé d'une pluralité de nanotubes, les nanotubes peuvent contacter les deux électrodes ou directement (réseau 2D) ou bien en formant une chaîne qui permet de les contacter, ou bien les deux.

C'est dans la zone de la surface de contact entre les deux matériaux de la jonction que le mécanisme dominant de transfert de charges se produit, et c'est sur cette zone que les analytes vont avoir l'influence maximale.

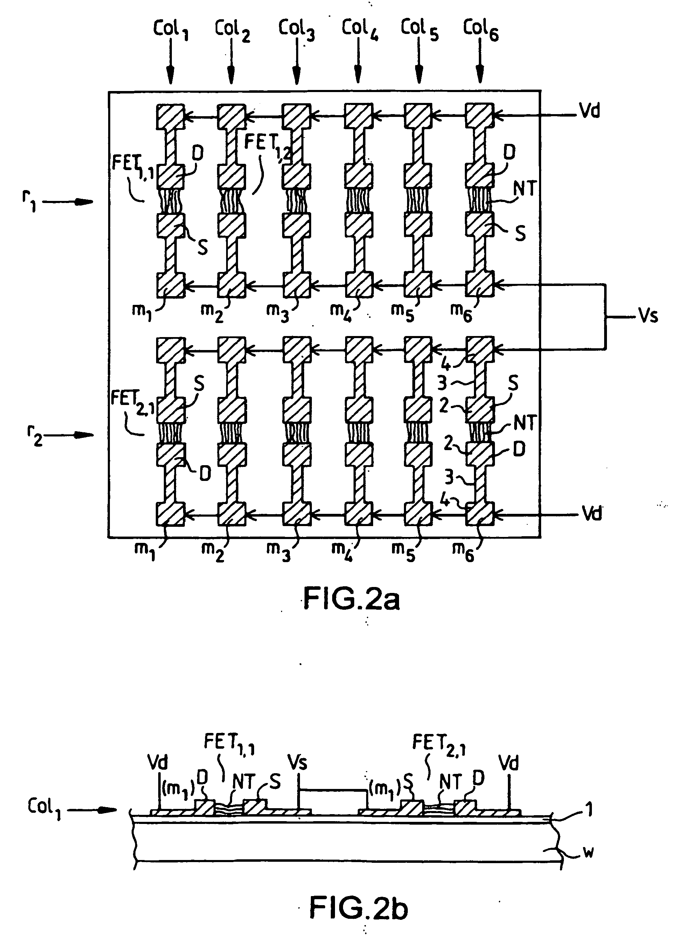

Un réseau comprenant une pluralité de transistors de ce type est illustré sur les figures 2a (vue de dessus) et 2b (vue en coupe), selon un premier mode de réalisation selon l'invention.

Les transistors sont réalisés sur un même substrat semi-conducteur w, qui agit comme grille G pour chacun des transistors du réseau. Dans ce mode de réalisation et comme mis en évidence sur les figures 2a et 2b, les mésas de source et drain se prolongent par des pistes conductrices et se terminent par des plots de contact.

Le substrat est par exemple un substrat silicium de type P (ie dopage de type P) sur lequel une fine couche d'oxyde SiO₂ a été déposée pour former la couche de diélectrique 1 (figure 2b). D'autres oxydes et types de substrat réalisant les mêmes fonctions et compatibles technologiquement peuvent être utilisés. Les épaisseurs de la couche d'oxyde, du wafer et son dopage sont en pratique optimisées en fonction de l'application.

Dans ce mode de réalisation et comme mis en évidence sur les figures 2a et 2b, les électrodes de source S et drain D comprennent chacune une mésa 2, qui forme la jonction avec le canal, et qui se prolonge par une piste conductrice 3 qui se termine par un plot de contact 4. En pratique, la mésa, la piste conductrice et le plot de contact sont généralement réalisés dans le même matériau conducteur. De même les électrodes source et drain d'un même transistor sont généralement réalisées dans le même matériau conducteur, pour des raisons d'homogénéité et de simplification des procédés de fabrication.

Selon l'invention, au moins certains des transistors du réseau R se différencient d'autres transistors du réseau par le matériau conducteur employé pour réaliser leurs électrodes de source et de drain. On a ainsi un réseau de transistors différenciés dont on exploite les réponses différentes en fonction du milieu auquel leurs jonctions sont exposées, pour permettre la détection d'un analyte spécifique.

Le matériau conducteur employé pour chaque transistor est ainsi sélectionné parmi un ensemble de matériaux conducteurs compatibles avec le substrat w utilisé. Dans un exemple où le substrat utilisé est un substrat silicium, et le matériau conducteur, un métal, ce matériau est par exemple choisi parmi ceux de la liste non exhaustive suivante: TiW/C, Ti/Au, Cr/Au, Ti, Co, Au, Al, Pd, Pt, Ni, Mo, W ....

Le réseau peut comprendre un nombre N de transistors tous différenciés, ou dont certains sont identiques, c'est à dire non différenciés au sens de l'invention. Ils peuvent être arrangés de façon quelconque, mais on prévoit de préférence de les arranger en ligne, et mieux, de façon matricielle.

Un tel réseau matriciel est illustré sur la figure 2a. Les transistors sont arrangés en rangées r₁, r₂ et colonnes Col₁, Col₂... à Col₆.

La différentiation des transistors qui sont tous réalisés sur le même substrat suppose autant d'étapes de dépôt et gravure que de matériaux conducteurs différents utilisés. De préférence, par souci de simplification et d'homogénéité, les source et drain d'un même transistor sont réalisées de préférence dans le même métal. Si comme dans l'exemple illustré sur les figures 2a et 2b, on utilise 6 matériaux conducteurs de différentiation m₁, à m₆, le procédé de fabrication correspondant comprend 6 opérations de dépôt/gravure, une par matériau de différentiation utilisé. Dans l'exemple, les transistors FET_{1,1} (rangée r₁ et Col₁) et FET_{1,2} (rangée r₁ et Col₂) sont différenciés, le premier étant caractérisé avec le matériau conducteur m₁ et le deuxième avec le matériau conducteur m₂ ; les transistors FET_{1,1} (rangée r₁ et Col₁) et FET_{2,1} (rangée r₂ et Col₁) sont identiques, tous les deux sont caractérisés avec le même matériau conducteur m₁.

Dans le but de simplifier la fabrication d'un tel réseau, on peut prévoir un "motif" de différentiation linéaire, par exemple un motif de différentiation qui se répète de rangée en rangée comme illustré sur la figure 2a. Le motif de rangée se caractérise par un nombre n de transistors et par n métaux différents, dans l'exemple, un matériau conducteur m₁ pour les transistors de la colonne Col₁, un matériau conducteur m₂ pour les transistors de la colonne Col₂,....., jusqu'à un matériau conducteur m₆ pour les transistors de la colonne Col₆. Ce motif de différentiation (m₁, m₂, m₃, m₄, m₅, m₆) est répété de rangée en rangée. Il peut aussi se répéter périodiquement sur la rangée. Sur la figure 2c on a ainsi représenté deux rangées identiques r₁, r₂ dans un réseau avec une répétition du motif de différentiation (m₁, m₂, m₃, m₄, m₅, m₆) : une fois sur les colonnes Col₁ à Col₆, une fois sur les colonnes suivantes Col₇ à Col₁₂.

Dans une variante non représentée, le motif peut se répéter de colonne en colonne. On peut encore avoir un motif de répétition à deux dimensions. De nombreuses combinaisons sont ainsi possibles, qui seront déterminées en fonction des impératifs de fabrication, des performances, des applications...

La répétition d'un motif de différentiation 1 D ou 2D, périodique a comme avantage de faciliter la fabrication.

L'utilisation de plusieurs transistors identiques, c'est à dire les transistors réalisés avec le même matériau conducteur d'électrode permet d'optimiser la surface de détection pour chaque "type" de transistor : cette surface de détection est égale à la surface exposée des jonctions J₁, J₂ de chaque transistor, multiplié par le nombre de transistors du même type.

Un tel arrangement a encore comme avantage d'offrir des possibilités de redondance. Par exemple, et comme illustré sur la figure 2a, on peut prévoir une première rangée de transistors différenciés deux à deux par le métal de leurs électrodes de source et de drain. La différenciation est illustrée par les motifs différents des électrodes. Cette rangée est doublée d'une deuxième rangée identique, qui assure une fonction de redondance : en cas de défaillance d'un ou de plusieurs transistors de la première rangée, on peut remplacer ces transistors par les transistors identiques de la deuxième. La redondance peut aussi se faire selon les colonnes. Ou bien la redondance peut se faire sur la rangée elle-même (ou la colonne) en utilisant le "motif" suivant.

Cette redondance peut être utilisée pour limiter le taux de rejet à la fabrication du réseau, mais aussi en opérationnel (redondance dynamique), en prévoyant des moyens de test et d'activation de la redondance adaptés.

On notera que la disposition et la forme des électrodes de source et drain sont indicatives. Elles sont choisies en fonction de la technologie utilisée, pour permettre au mieux la connexion des plots 4 de contact de source S et de drain D (Fig.2a), aux bus d'alimentation en tension qui amènent la tension Vd et la tension Vs respectivement sur le drain D et sur la source S (Fig.2b). Ces bus sont réalisés de façon habituelle selon l'état de l'art.

Différentes dispositions des électrodes peuvent ainsi être envisagées, comme par exemple la disposition linéaire de part et d'autre du canal comme illustrée sur les figures 2a à 2c. Dans une telle disposition, on inverse avantageusement les contacts de source et de drain, en sorte que tous les contacts de source dans l'exemple, soient alimentés par un bus d'alimentation en tension de source Vₛ en milieu de réseau, et que tous les contacts de drain soient alimentés par un bus d'alimentation en tension de drain V_{d} disposé en périphérie.

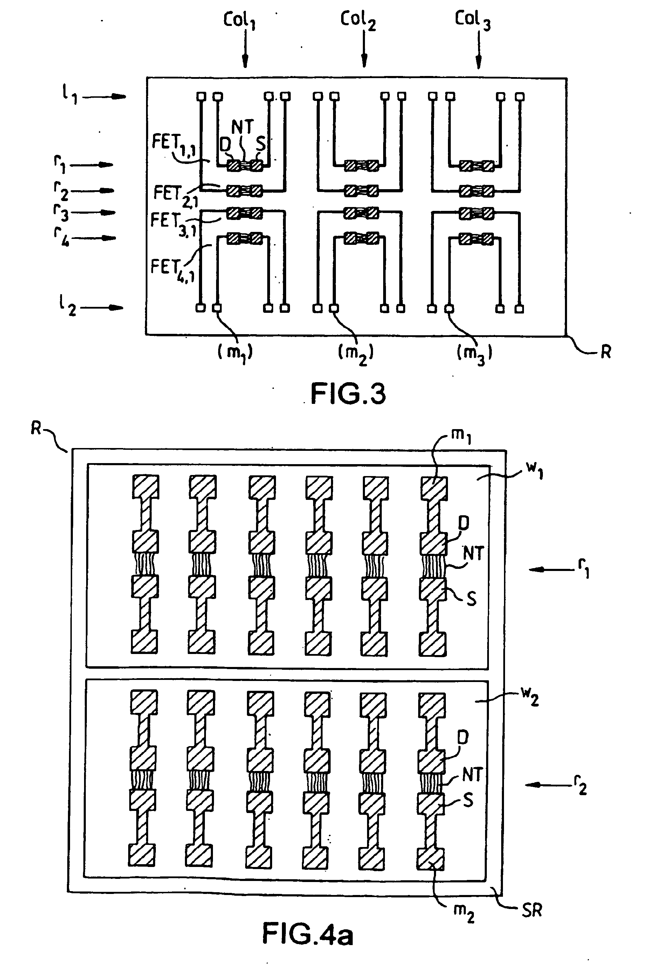

Une autre disposition est illustrée sur la figure 3a : C'est une disposition en U ramenant les plots de contact de source et de drain d'une ou plusieurs lignes sur une ligne parallèle. Dans l'exemple, les plots de contact de source et de drain des transistors des rangées r₁ et r₂ sont alignés sur une ligne 11, en périphérie du réseau, et les plots de contact de source et de drain des transistors des rangées r₃, et r₄ sont alignés sur une ligne 12, en périphérie du réseau.

Dans une variante de réalisation de l'invention, on prévoit de différencier les transistors en faisant varier la surface de contact entre les deux matériaux formant les jonctions. Il s'agit de faire varier le nombre d'atomes de métal disponibles pour prendre le contact sur le matériau semi-conducteur. Une telle variante permet de simplifier la fabrication du réseau, en réduisant le nombre de métaux de différentiation utilisés, sans dégrader les performances de la détection, notamment en terme de bruit.

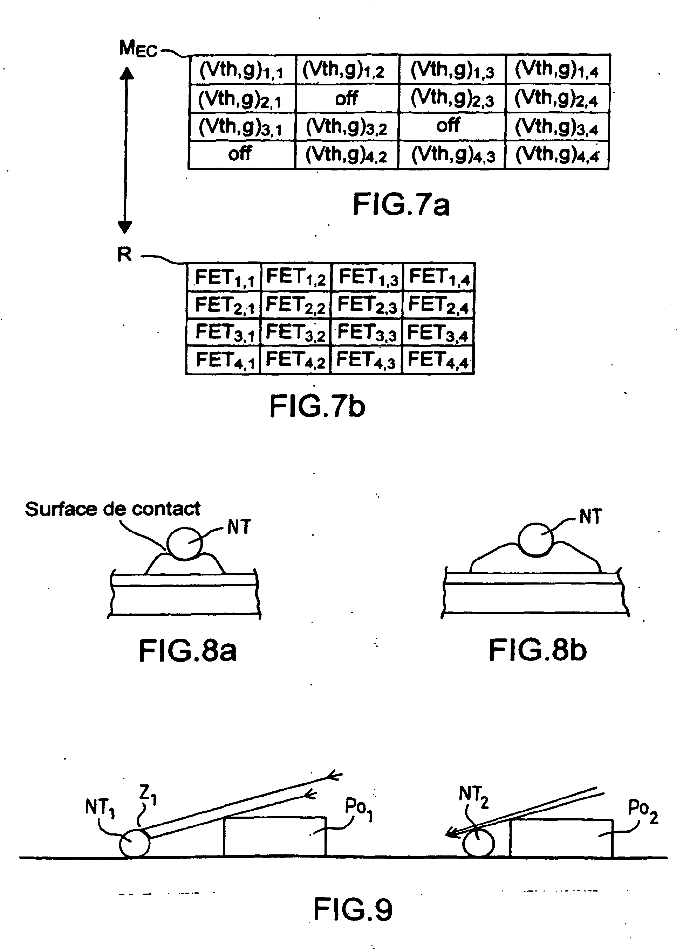

Dans un exemple de réalisation pratique, on peut agir sur le matériau conducteur utilisé pour les électrodes, pour modifier cette surface de contact. C'est ce qui est illustré à titre d'exemple, sur les figures 8a et 8b : selon le transistor, on dépose une quantité différente de métal, (ou un nombre différents de nanofils métalliques), on dépose l'élément nanotube NT par dessus, puis on effectue un recuit. Il s'ensuit des formes et dimensions différentes des mésas : la surface de contact entre le matériau conducteur et le matériau semi-conducteur peut ainsi être modifiée d'un transistor à l'autre.

Dans un autre exemple de réalisation pratique illustré sur la figure 9, on dépose d'abord l'élément nanotube NT, puis on réalise un masque en face active, par exemple en résine ou tout autre matériau adapté, avec un dessin approprié en sorte de former des plots d'ombrage Po₁, Po₂ autour des extrémités des éléments nanotubes NT₁, NT₂, à une distance variable de ceux-ci, selon les transistors. On réalise ensuite un dépôt de diélectrique selon un procédé directionnel, en angle rasant. Ainsi, comme illustré sur la figure 9, en fonction de la distance entre le plot d'ombrage et l'élément nanotube associé, on peut recouvrir une partie variable de la surface du nanotube, avec un diélectrique. L'élément nanotube NT, est ainsi recouvert d'une couche de diélectrique dans une zone z₁, tandis que l'autre élément nanotube ne reçoit pas du tout de diélectrique.

Après cette étape de différentiation par du diélectrique, on réalise les électrodes Source et Drain, recouvrant en partie les extrémités du nanotube de manière à assurer le contact.

Là où il y a du diélectrique sur le nanotube, ce diélectrique agit localement comme une passivation : il n' y a pas de contact électrique dans cette zone entre les deux matériaux qui forment la jonction. Ainsi selon la surface de diélectrique déposée, la forme et les dimensions de la surface de contact de la jonction sont différentes. La réponse électrique du transducteur sera donc aussi différente, en fonction des caractéristiques de la surface de contact de la jonction exposée aux analytes à détecter.

Dans une autre variante de réalisation d'un réseau de transistors selon l'invention, on prévoit d'utiliser une pluralité de substrats, au moins deux. Sur chaque substrat, on réalise des transistors identiques. Ceci permet de n'avoir à utiliser par substrat qu'un métal. Le procédé de fabrication s'en trouve simplifié. Le temps de fabrication d'un substrat est réduit. Ensuite on assemble des transistors provenant de différents substrats, sur un même support, pour former un réseau de transistors différenciés selon l'invention.

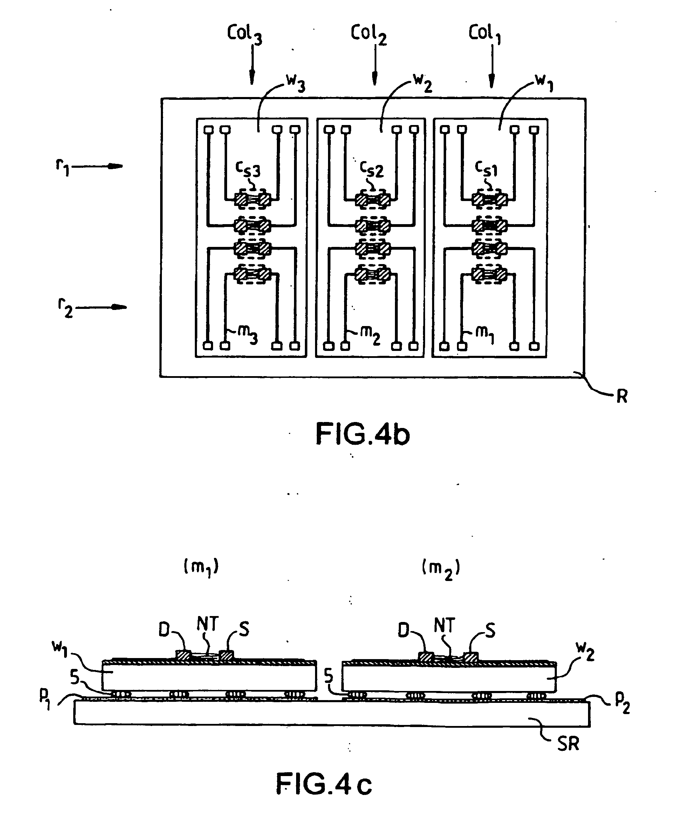

Un exemple de réalisation d'un réseau R selon cette variante de réalisation est représentée sur les figures 4a et 4b, avec des électrodes en métal. Dans l'exemple illustré sur la figure 4a, on a deux substrats w1 et w2, disposés selon deux rangées r₁ et r₂ parallèles. Sur chaque substrat, on a réalisé une ligne de transistors identiques. Sur le premier substrat w1, les électrodes source/drain sont réalisées dans un premier métal m1. Sur le deuxième substrat w2, les électrodes source/drain sont réalisés dans un deuxième métal m2.

Sur la figure 4b, on a illustré une variante selon laquelle les différents substrats, dans l'exemple w1, w2 et w3, sont disposés selon trois colonnes parallèles.

Ce mode d'assemblage de différents substrats permet de simplifier le procédé de fabrication, en parallélisant la différentiation des transistors : les transistors à différentier sont réalisés sur des substrats différents. Un procédé correspondant comprendra par exemple les étapes suivantes :
Au départ, on dispose de plusieurs tranches (plaquettes) de substrat. Sur chaque tranche, on réalise autant de transistors que permis par la technologie. Ces transistors sont tous identiques sur une plaquette, et caractérisés par un métal d'électrode déterminé.

On peut ainsi réaliser au moins autant de plaquettes de transistors que de métaux différents permis pour une technologie donnée (substrat silicium de type P par exemple).

Ensuite, on découpe les plaquettes en sous-ensembles de transistors, de manière à former des sous réseaux de transistors identiques.

On assemble alors des sous-réseaux choisis de manière adaptée en fonction de leur métal de différentiation, sur un même support SR.

On sélectionne par exemple n sous-réseaux wᵢ, chaque sous-réseau étant caractérisé par un métal donné m_{i.} avec i=1 à n, et on les assemble sur un même support, en sorte de former un réseau selon l'invention. On peut sélectionner les sous-réseaux et les assembler de différentes manières. On peut notamment souhaiter avoir plus de transistors d'un type que d'un autre. Les répartir en rangées, ou colonnes, ou les deux...en fonction de différents critères technologiques ou d'utilisation. Selon la configuration choisie, les sous-réseaux seront 1 D ou 2D. L'invention ne se limite pas à une configuration de réseau particulière.

Sur la figure 4a, on a dans l'exemple deux sous-réseaux 1 D w₁ et w₂ disposés en parallèle pour former chacun une rangée r₁, r₂ du réseau, sur un support SR. Les transistors du sous-réseau w₁ formant la rangée r₁ ont leurs électrodes de source S et de drain D dans un premier métal m₁. Les transistors du sous-réseau w₂ formant la rangée r₂ ont leurs électrodes de source S et de drain D dans un autre métal m₂.

Ceci permet d'utiliser la large palette offerte par une technologie donnée dans le choix des métaux, voire des substrats, sans que se pose le problème des limitations liées à leur compatibilité, et celles dues au degré de complexité de réalisation (nombre d'étapes du procédé notamment).

Pour la connexion électrique de source, drain et grille de tous ces transistors, on peut prévoir différentes solutions.

Avantageusement, et comme représenté sur la figure 4c, on prévoit que le support du réseau SR sur lequel on dispose les n sous-réseaux, est muni d'un réseau de pistes conductrices p₁, p₂, qui va permettre, par un report des sous-réseaux sur ce support par une technique de type flip-chip, d'appliquer sur chacune des grilles des transistors du réseau, une tension de grille appropriée.

Dans une configuration avantageuse, chaque sous-réseau est muni sur sa face arrière, sur le substrat, de billes conductrices 5 (pellets) qui servent aussi de moyens d'attache (colle conductrice). Ces billes sont reportées sur le support SR, sur une piste conductrice telle que la piste p₁ sur la figure, qui sert de plan d'alimentation de la grille des transistors du sous-réseau qui est reporté dessus.

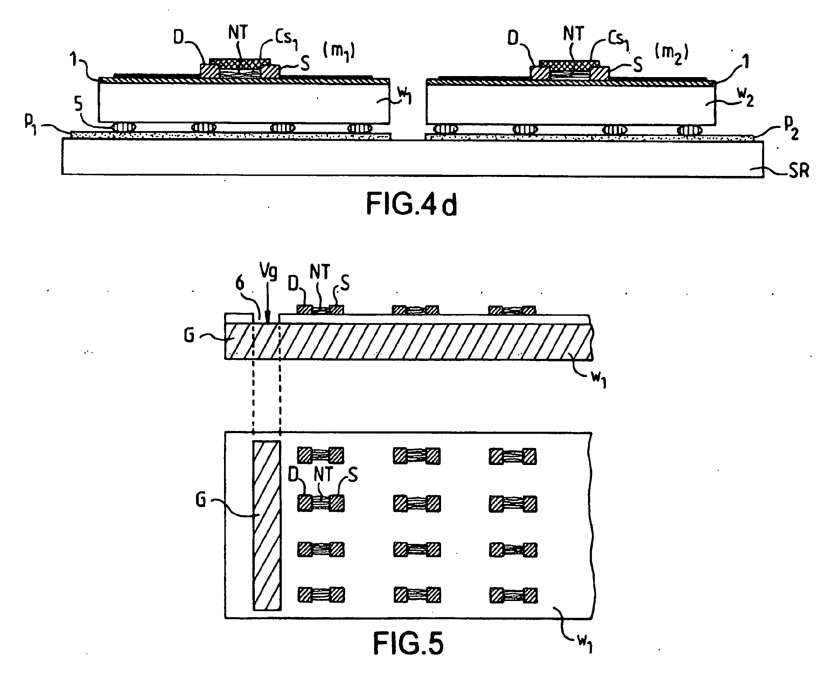

Dans une autre configuration représentée à la figure 5, on prévoit de réaliser le contact de grille sur la face active du substrat w (fig.2a) ou de chaque sous-réseau w₁ (fig. 4a). Le contact de grille G de chaque sous-réseau w₁ (ou substrat) est alors réalisé en face active, en gravant la couche de diélectrique 1 pour atteindre le substrat, pour former un via 6 sur lequel on viendra appliquer la tension de grille V₉, typiquement par un bus d'alimentation (non représenté). Les transistors d'un même sous-réseau auront de préférence leurs grilles connectées en commun à une même tension de grille. On peut aussi prévoir que tous les transistors de tous les sous-réseaux aient leurs grilles connectées en commun à une même tension de grille.

Dans un perfectionnement de l'invention, pour améliorer la sélectivité du réseau de transistors de détection ainsi réalisé, on prévoit en outre de fonctionnaliser l'élément nanotube NT de tout ou partie des transistors du réseau, en réalisant une couche sensible sur l'élément nanotube NT, qui peut être une couche de polymère, d'enzymes ou d'autres substances chimiques. On améliore ainsi la sélectivité du dispositif de détection, et on contourne le problème de NSB dans le cas de la reconnaissance de protéines. Les transistors deviennent aussi plus sensibles aux variations des concentrations des analytes.

Ce perfectionnement s'applique aux différentes variantes de configuration d'un réseau selon l'invention. La couche sensible disposée sur l'élément nanotube NT transducteur, peut être une couche d'un polymère spécifique, ou plus généralement une couche de molécules choisies pour leur aptitude à capter, immobiliser, adsorber des analytes spécifiques que l'on souhaite détecter, et dont la présence va modifier la réponse du transducteur. Ce peut être une couche d'une chaîne complexe de molécules, une couche de polymère, d'enzymes, de protéines...

Comme illustré par exemple sur les figures 4b et 4d, on vient ainsi recouvrir l'élément nanotube NT d'un transistor, de plusieurs transistors ou de tous les transistors du réseau R, d'une couche sensible, qui peut varier d'un transistor à l'autre. Dans l'exemple de la figure 4b, on a ainsi une couche sensible spécifique, respectivement, cs₁, cs₂, cs₃, correspondant à chacun des métaux de différentiation, respectivement, m₁. m₂,m₃. Dans l'exemple de la figure 4d, on a la même couche sensible cs₁ pour tous les transistors, indépendamment du métal de différentiation.

Le choix des couples (métal,couche sensible) pour chaque transistor du réseau va essentiellement dépendre de l'application visée et de la fonction spécifique de la couche sensible. S'agissant d'empêcher l'effet de NSB dans une application de détection d'une protéine spécifique, typiquement dans un milieu liquide, la couche sensible est choisie pour favoriser l'immobilisation de cette protéine spécifique. Elle est alors de préférence la même pour tous les transistors du réseau.

S'agissant de catalyser une réaction avec une molécule de gaz, il est possible de déterminer un couple métal-couche sensible optimum en termes de variation des propriétés électriques des jonctions métal-canal. On aura alors plusieurs couples (métal/couche sensible) différents déterminés pour un réseau de détection.

On notera que la couche sensible doit être exposée au milieu dans lequel on fait la détection, au moins autour de la jonction ou des jonctions de chaque transistor. C'est une couche mince, de manière à permettre à l'élément nanotube d'agir comme transducteur.

Ainsi, selon cet aspect de l'invention, un transistor peut se différencier de son voisin par son métal d'électrode ou par sa couche sensible disposée sur le nanotube. On peut réaliser de nombreuses combinaison avec des différentiations par métal et polymère qui utilisent les mêmes configurations : selon les lignes, selon les colonnes, ou des configurations 2D, selon les performances attendues, le type d'analytes à détecter et le type de milieu dans lequel on doit détecter ces analytes.

Sur le plan de la réalisation de la fonctionnalisation, cette fonctionnalisation est réalisée par les techniques de l'état de l'art. En particulier, lorsque la couche de fonctionnalisation de l'élément nanotube est une couche de polymère, ce dépôt peut être fait par dépôt par pulvérisation de gouttelettes.

Un dispositif électronique 10 de détection d'analytes selon l'invention comprend alors au moins un réseau R de transistors différenciés selon l'invention, et éventuellement fonctionnalisés.

Un milieu liquide ou gazeux de composition déterminée interagit donc de façon différenciée avec chacun des transistors du réseau du dispositif. On peut ainsi obtenir une empreinte très spécifique de ce milieu à un moment considéré. Cette empreinte peut se définir par une matrice des états de conduction des transistors du réseau R. L'état de conduction d'un transistor est donnée par sa tension de seuil, laquelle varie en fonction du type de molécules auquel la jonction est exposée. La quantité des molécules influençant l'intensité du courant passant dans les transistors en état on, l'état de conduction est en outre donné par une mesure de la variation de courant du transistor avec la tension Vgs.

En fonction des transistors du réseau qui sont en état on pour une valeur donnée de la tension de seuil, et en fonction du signal de courant (pente du courant source-drain I_{ds} en fonction de la tension grille-source V_{gs}) passant dans ces transistors en état *on*, on peut déduire respectivement le type de molécules auxquelles les transistors à base de nanotubes ont été exposés et la quantité de molécules.

En fonction de l'application visée, en particulier le type d'analytes à détecter, le réseau est caractérisé par le choix des métaux de différentiation (en fonction de la technologie retenue) et éventuellement de la couche sensible de fonctionnalisation (ou des couches sensibles), appropriés pour la détection de ces analytes spécifiques. On peut alors déduire par des moyens électronique appropriés de commande et lecture des transistors du réseau, la présence de ces analytes spécifiques, et leur concentration.

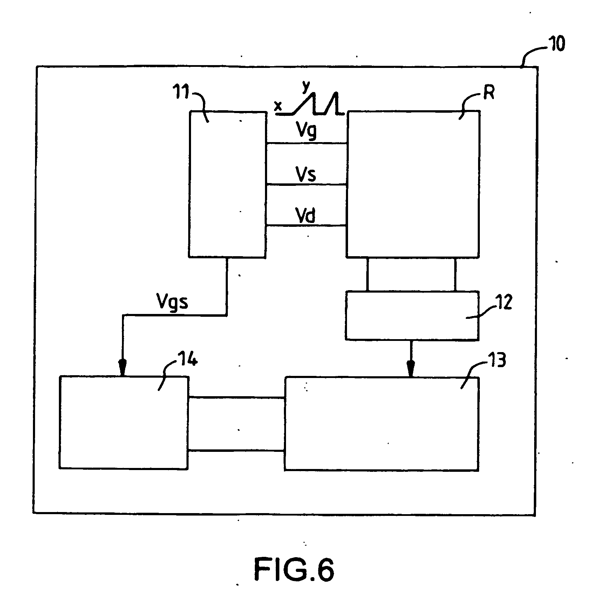

Typiquement et comme illustré schématiquement sur la figure 6, on prévoit dans le dispositif électronique 10 des moyens de commande 11 pour appliquer les tensions de grille Vg, de drain Vd et de source Vs de manière appropriée sur les transistors du réseau R, et des moyens de lecture 12 de l'état passant (conducteur de courant) ou bloqué des transistors. Ces moyens de lecture sont associés à une mémoire 13, et des moyens 14 de traitement des données, de manière à pouvoir en déduire en fonction de la tension Vgs appliquée sur chaque transistor du réseau, la tension de seuil de chaque transistor. Ces moyens de traitement établissent et analysent la matrice d'états de conduction ainsi obtenue, pour détecter la présence d'analytes spécifiques.

Cette détection peut se faire par comparaison à une ou des matrices précédentes.

Elle peut aussi se faire par rapport à au moins une matrice de référence obtenue par étalonnage préalable et qui constitue l'empreinte sur ce réseau du milieu dans lequel on opère la détection. Cette matrice de référence est typiquement mémorisée dans le dispositif 10 après une étape d'étalonnage. Cette étape d'étalonnage peut consister en un relevé d'une ou de plusieurs matrices d'états de conduction des transistors, dans des conditions normales du milieu à surveiller. Ces matrices sont mémorisées dans le dispositif électronique 10.

En mode opérationnel, un relevé périodique de la matrice d'états de conduction de la matrice est effectué. La matrice obtenue est comparée à chacune des matrices de référence, pour en déduire la présence ou non des analytes spécifiques.

Dans le cas d'une détection positive d'analytes, les moyens de lecture 12 permettent en outre avantageusement aux moyens de traitement des données 14 de mesurer la pente g du courant I_{ds} en fonction de la tension grille-source V_{gs}, de manière à pouvoir en déduire une concentration des analytes détectés. Sur les figures 7a et 7b, on a représenté schématiquement une matrice d'états de conduction M_{EC}. figure 7a, relevée pour un réseau matriciel de transistors R, figure 7b.

A chaque transistor FETᵢⱼ du réseau R correspond soit un état "off", ou un état "on". Pour les transistors à l'état "on", la matrice M_{EC} contient un couple (valeur de tension de seuil Vₜₕ, pente de courant g)_{i,j}.

Une procédure de mise en oeuvre d'un dispositif électronique 10 selon l'invention peut être la suivante, avec un réseau R dont les transistors reçoivent tous les mêmes tensions de grille V_{g}, de drain V_{d} et de source Vₛ :
- on dispose d'un signal de tension de grille V_{g} qui évolue dans le temps comme une rampe de tension, depuis une valeur x à une valeur y, alors que les tensions de drain V_{d} et de source Vₛ sont fixes.

Les valeurs x et y de la rampe de tension V_{g} sont choisies en pratique en fonction des caractéristiques des transistors et de l'application visée (caractéristiques du milieu et du ou des analytes à détecter).
- les moyens de lecture 12 pour la détermination de l'état passant (conducteur) ou bloqué (non conducteur) des transistors, sont configurés avec un seuil de détection tel que l'on punisse identifier clairement à quel moment un transistor est conducteur "on", compte-tenu du rapport signal sur bruit de la détection. On notera à ce propos que si l'élément nanotube NT des transistors du réseau comprend plusieurs nanotubes, on augmente la composante signal, ce qui améliore la détection.

L'application d'une tension V_{g} en forme de rampe permet à chaque nouvelle rampe, de déterminer quels transistors sont devenus passants et à quelles valeurs bien précises de tension de grille V_{g}.

Ces valeurs de tension de grille auxquelles les différents transistors sont devenus passants permettent de constituer pour chaque rampe, une matrice d'états de conduction par laquelle un analyte ou des analytes vont pouvoir être identifiés.

On a un dispositif dé détection temps réel, dont le temps de réponse est sensiblement égal à la durée de la rampe. Il dépend typiquement de la dimension du réseau R, et du temps de lecture, ce qui dépend de la technologie des transistors du réseau et des moyens de commande et de lecture.

Dans le cas où l'on cherche à détecter l'intrusion d'un analyte ou d'analytes dans un environnement spécifique, tel qu'un milieu urbain ou un milieu industriel..., une étape d'étalonnage est nécessaire.

Cette étape d'étalonnage consiste tout d'abord à tester le dispositif 10 dans des conditions considérées comme normales de l'environnement considéré.

Si on prend par exemple un dispositif pour la détection de gaz sarin dans un couloir de métro, on peut prévoir les différentes étapes suivantes :
Etape 1 : on relève la matrice des états de conduction des transistors du réseau R, disposé dans l'environnement considéré : "l'air" du métro.
   On prévoit plusieurs étalonnages, en fonction de la présence de polluants classiques (NH₃, CO_{2'}, ...) pour des concentrations "réelles" (qui sont normales dans l'environnement en question), et/ou en fonction d'une concentration variable d'humidité. Pour chaque étalonnage, on mémorise la matrice des états de conduction des transistors du réseau R. En pratique, ces états de conduction sont les valeurs d'activation des différents transistors. On obtient une ou une pluralité de premières matrices de référence, qui sont autant d'empreintes qui définissent la normalité de l'environnement considéré.
Etape 2 : On relève la matrice des valeurs de tension d'activation des transistors du réseau R exposé à une concentration variable de gaz sarin. Ce relevé est effectué, en simulant l'environnement habituel, en variant l'humidité et la concentration de polluants, comme dans l'étape 1. On obtient des deuxièmes matrices de référence.
Etape 3 : On analyse les résultats en comparant les premières et deuxièmes matrices de référence. De cette opération, on déduit la valeur ou la plage de valeurs des tensions d'activation pour chaque transistor du réseau, en sorte que l'on puissent identifier de façon univoque le gaz sarin pour différentes concentrations et pour des paramètres environnementaux variables. On obtient une matrice de référence de détection avec des plages de variation pour chaque transistor.
Etape 4 : On place le dispositif en milieu opérationnel. On relève de façon périodique, avec une période appropriée, la matrice des valeurs d'activation des transistors du réseau, et l'on compare cette matrice à la matrice de référence déterminée à l'étape 3. On peut aussi imaginer de comparer cette matrice relevée en opérationnel, à chacune des matrices de référence de l'étape 2, selon les moyens de traitement numérique dont on dispose.

On notera que si le dispositif est amené à détecter plusieurs types d'analytes, on prévoit plusieurs étapes 2 et 3 de manière à constituer pour chaque type, une matrice de référence de détection.

On peut en outre prévoir différent modes d'utilisation du dispositif électronique de détection selon l'invention.

Dans un mode d'utilisation en dispositif mobile, portable, le dispositif est actionné manuellement par un opérateur qui effectue le relevé. Le dispositif portable signale les anomalies de détection par rapport à une situation normale.

Dans un mode d'utilisation en situation "fixe" (par exemple, une machine fixée sur un mur), l'activation du dispositif peut être automatique. Le dispositif peut par exemple être déclenché toutes les minutes. Le dispositif effectue son relevé de matrice et le transmet à un centre de traitement des données (monitoring continu).

Dans un autre mode d'utilisation, la machine est déclenchée à distance, en cas d'alerte, par exemple si une alerte chimique est donnée. Il s'agit dans ce mode d'utilisation de vérifier la réalité et la nature du danger.

Dans une variante particulièrement adaptée à une utilisation du dispositif de détection dans un milieu qui peut être très humide (mais non pas liquide), par exemple dans les régions à mousson ou tropicales, on prévoit un mode de fonctionnement à chaud, par exemple à une température de fonctionnement de l'ordre de 100°C à 200°C, ce qui peut être obtenu par un dispositif de chauffage approprié. De cette façon, on "assèche" le milieu de détection localement, au moins dans la zone de détection du dispositif, ce qui permet de résoudre le problème de parasitage des mesures en fonction de l'humidité. Dans ce cas, on peut utiliser un réseau de transistors différenciés selon l'invention, sans fonctionnalisation par des polymères.

## Revendications

1. Réseau de transistors à effet de champ pour la détection d'analytes, chaque transistor du réseau comprenant une grille (G), une électrode source (S) et une électrode drain (D), lesdites électrodes étant formées dans un matériau conducteur, et un élément semi-conducteur nanotube ou nanofil (NT) formant un canal du transistor, ledit élément (NT) étant connecté à une extrémité à l'électrode source (S), et à une autre extrémité à l'électrode drain (D), ladite électrode source (S), respectivement ladite électrode drain (D), formant avec le canal une première jonction (J₁), respectivement une deuxième jonction (J₂), **caractérisé en ce que** ledit réseau comprend au moins deux transistors différenciés (FET_{1,1}, FET_{1,2}) par un matériau conducteur d'électrode source et/ou drain différent (m1, m2), lesdits transistors comprenant chacun une zone exposée de détection comprenant une ou les deux jonctions parmi la première et la deuxième.

2. Réseau de transistors selon la revendication 1, **caractérisé en ce que** une ou les deux jonctions (J₁, J₂) d'au moins un premier transistor (FET_{1,1}), et un deuxième transistor (FET_{2,1}) du réseau sont différenciées par des dimensions et/ou forme de surface de contact entre les deux matériaux formant la jonction.

3. Réseau de transistors selon la revendication 1 ou 2, **caractérisé en ce qu'**au moins ladite première jonction (J₁) formée avec la source est exposée au milieu à détecter.

4. Réseau de transistors selon la revendication 1 ou 2, **caractérisé en ce qu'**au moins un transistor du réseau comprend une couche sensible de fonctionnalisation (cs₁) déposée sur l'élément semi-conducteur (NT) dudit transistor.

5. Réseau de transistors selon la revendication 4, **caractérisé en ce que** ladite couche sensible de fonctionnalisation est une couche de molécules chimiques de type polymère, ou enzymes.

6. Réseau de transistors selon la revendication 4 ou 5, **caractérisé en ce que** tout ou partie des transistors du réseau comprennent une couche sensible de fonctionnalisation, et **en ce que** le type de la couche sensible est variable selon les transistors.

7. Réseau de transistors selon l'une quelconque des revendications précédentes, **caractérisé en ce qu'**il comprend une couche de passivation (cp) avec des ouvertures correspondant aux zones de détection du réseau.

8. Réseau de transistors selon l'une quelconque des revendications 1 à 7, chaque transistor du réseau comprenant :
un substrat (w) formant grille (G),
une couche de diélectrique (1) sur le substrat,
un élément semi-conducteur nanotube ou nanofil (NT), une électrode source (S) et une électrode drain (D) disposés sur la couche de diélectrique, le substrat formant la face arrière, et lesdits élément nanotube, électrode drain et électrode source formant la face active.

9. Réseau selon la revendication 8, **caractérisé en ce qu'**il comprend au moins deux sous-réseaux de transistors (w₁, w₂) et un support (SR) sur lequel sont assemblés lesdits sous-réseaux.

10. Réseau selon la revendication 9, **caractérisé en ce que** lesdits sous-réseaux sont assemblés sur ledit support selon la technique de flip-chip.

11. Réseau selon la revendication 10, en combinaison avec la revendication 7, **caractérisé en ce que** ledit support (SR) comprend des pistes conductrices (p₁, p₂) pour la connexion de la grille de chacun desdits sous-réseaux (w₁, w₂).

12. Réseau selon l'une quelconque des revendications 8 à 10, **caractérisé en ce qu'**une connexion (6) de la grille est prévue en face active, par un trou gravé dans la couche de diélectrique.

13. Dispositif électronique de détection d'analytes apte à opérer dans un milieu liquide ou gazeux, comprenant un réseau (R) de transistors à effet de champ selon l'une quelconque des revendications précédentes, et des moyens de commande (11,12) pour appliquer des tensions de grille (Vg), de drain (V_{d}) et de source (Vₛ) sur des transistors dudit réseau pour déterminer pour chacun desdits transistors, une tension de seuil correspondant à une valeur de tension entre grille et source à laquelle ledit transistor devient passant, des moyens (13) pour mémoriser une matrice d'états de conduction (M_{EC}), correspondante, comprenant les tensions de seuil de chacun desdits transistors, et des moyens de traitement de données (14) pour fournir une information de détection en fonction de ladite matrice.

14. Dispositif électronique de détection d'analytes selon la revendication 13, **caractérisé en ce qu'**il comprend en outre un dispositif de chauffage autorisant un mode de fonctionnement à chaud.

15. Dispositif électronique de détection selon l'une des revendications 13 à 14, **caractérisé en ce que** lesdits moyens de commande sont configurés pour fournir une mesure de la pente (g) de la variation de courant en fonction de la tension appliquée entre grille et source pour chacun desdits transistors devenus passants, les pentes desdits transistors étant mémorisées dans ladite matrice d'états de conduction (M_{EC}), et lesdits moyens (13) de traitement de données étant configurés pour fournir une information de concentration d'analytes à partir desdites pentes.

16. Dispositif électronique selon l'une quelconque des revendications 13 15, **caractérisé en ce que** les moyens de traitement de données (14) comprennent une ou des matrices de référence, et des moyens de comparaison entre une matrice d'états de conduction et lesdites matrices de référence.

## Claims

1. Array of field-effect transistors for the detection of analytes, each transistor of the array comprising a gate (G), a source electrode (S) and a drain electrode (D), said electrodes being made of a conducting material, and a nanotube or nanowire semiconductor element (NT) forming a channel of the transistor, said element (NT) being connected at one end to the source electrode (S) and at another end to the drain electrode (D), said source electrode (S), or said drain electrode (D), respectively forming with the channel a first junction (J₁) or a second junction (J₂) respectively, **characterised in that** said array comprises at least two differentiated transistors (FET_{1.1}, FET_{1.2}) that are differentiated by a different conducting material for the source electrode and/or drain electrode (m1, m2), said transistors each comprising an exposed detection zone comprising one or both junctions from among the first and second.

2. Array of transistors according to claim 1, **characterised in that** one or both junctions (J₁, J₂) of at least a first transistor (FET_{1.1}) and a second transistor (FET_{2.1}) of the array are differentiated by the dimensions and/or shape of the contact surface between the two materials forming the junction.

3. Array of transistors according to claim 1 or 2, **characterised in that** at least said first junction (J₁) formed with the source is exposed to the medium to be detected.

4. Array of transistors according to claim 1 or 2, **characterised in that** at least one transistor of the array comprises a sensitive functionalisation layer (cs₁) deposited on the semiconductor element (NT) of said transistor.

5. Array of transistors according to claim 4, **characterised in that** said sensitive functionalisation layer is a layer of polymer-type chemical molecules or enzymes.

6. Array of transistors according to claim 4 or 5, **characterised in that** all or some of the transistors of the array comprise a sensitive functionalisation layer and **in that** the type of the sensitive layer can vary depending on the transistors.

7. Array of transistors according to any one of the preceding claims, **characterised in that** it comprises a passivation layer (cp) with apertures corresponding to the detection zones of the array.

8. Array of transistors according to any one of claims 1 to 7, each transistor of the array comprising:
a substrate (w) forming a gate (G),
a dielectric layer (1) on the substrate,
a nanotube or nanowire semiconductor element (NT), a source electrode (S) and a drain electrode (D) that are disposed on the dielectric layer, the substrate forming the rear face, and said nanotube element, drain electrode and source electrode forming the active face.

9. Array according to claim 8, **characterised in that** it comprises at least two subarrays of transistors (w₁, w₂) and a support (SR) on which said subarrays are assembled.

10. Array according to claim 9, **characterised in that** said subarrays are assembled on said support using the flip-chip technique.

11. Array according to claim 10 in combination with claim 7, **characterised in that** said support (SR) comprises conducting tracks (p₁, p₂) for connecting the gate of each of said subarrays (w₁, w₂).

12. Array according to any one of claims 8 to 10, **characterised in that** a connection (6) for the gate is provided in the active face via a hole etched in the dielectric layer.

13. Electronic analyte detection device capable of operating in a liquid or gaseous medium, comprising an array (R) of field-effect transistors according to any one of the preceding claims and control means (11, 12) for applying a gate voltage (Vg), a drain voltage (V_{d}) and a source voltage (Vₛ) to transistors of said array in order to determine, for each of said transistors, a threshold voltage corresponding to a gate-source voltage value at which said transistor is turned on, means (13) for storing a corresponding matrix of conduction states (M_{EC}), comprising the threshold voltages for each of said transistors, and data processing means (14) for delivering detection information according to said matrix.

14. Electronic analyte detection device according to claim 13, **characterised in that** it further comprises a heating device permitting a hot operation mode.

15. Electronic detection device according to one of claims 13 to 14, **characterised in that** said control means are configured so as to deliver a measurement of the slope (g) of the variation in current as a function of the applied gate-source voltage for each of said turned-on transistors, the slopes of said transistors being stored in said matrix of conduction states (M_{EC}) and said data processing means (13) being configured to deliver analyte concentration information on the basis of said slopes.

16. Electronic device according to any one of claims 13 to 15, **characterised in that** the data processing means (14) comprise one or more reference matrices and comparison means for comparing a matrix of conduction states with said reference matrices.

## Patentansprüche

1. Netzwerk von Feldeffekttransistoren zum Nachweisen von Analyten, wobei jeder Transistor des Netzwerks ein Gate (G), eine Source-Elektrode (S) und eine Drain-Elektrode (D), wobei die Elektroden aus einem Leitermaterial hergestellt sind, und ein einen Kanal des Transistors bildendes Nanoröhrchen- oder Nanodraht-Halbleiterelement (NT) umfasst, wobei das Element (NT) an einem Ende mit der Source-Elektrode (S) und am andere Ende mit der Drain-Elektrode (D) verbunden ist, wobei die Source-Elektrode (S) bzw. die Drain-Elektrode (D) mit dem Kanal einen ersten Übergang (J₁) bzw. einen zweiten Übergang (J₂) bildet, **dadurch gekennzeichnet, dass** das Netzwerk wenigstens zwei durch unterschiedliche Source- und/oder Drain-Elektroden-Leitermaterialien (m₁, m₂) differenzierte Transistoren (FET_{1,1}, FET_{1,2}) umfasst, wobei die jeweils eine exponierte Nachweiszone umfassenden Transistoren einen oder beide aus dem ersten und zweiten Übergang umfassen.

2. Transistornetzwerk nach Anspruch 1, **dadurch gekennzeichnet, dass** ein oder beide Übergänge (J₁, J₂) wenigstens eines ersten Transistors (FET_{1,1}) und eines zweiten Transistors (FET_{2,1}) des Netzwerks durch die Abmessungen und/oder die Form der Kontaktfläche zwischen den beiden den Übergang bildenden Materialien differenziert sind.

3. Transistornetzwerk nach Anspruch 1 oder 2, **dadurch gekennzeichnet, dass** wenigstens der mit der Source gebildete erste Übergang (J₁) gegenüber dem nachzuweisenden Medium exponiert ist.

4. Transistornetzwerk nach Anspruch 1 oder 2, **dadurch gekennzeichnet, dass** wenigstens ein Transistor des Netzwerks eine auf das Halbleiterelement (NT) des Transistors aufgebrachte empfindliche Funktionalisierungsschicht (cs₁) umfasst.

5. Transistornetzwerk nach Anspruch 4, **dadurch gekennzeichnet, dass** die empfindliche Funktionalisierungsschicht eine Schicht aus chemischen Molekülen des Polymer- oder Enzymtyps ist.

6. Transistornetzwerk nach Anspruch 4 oder 5, **dadurch gekennzeichnet, dass** alle oder einige der Transistoren des Netzwerks eine empfindliche Funktionalisierungsschicht umfassen, und **dadurch**, dass die empfindliche Schicht je nach den Transistoren variabel ist.

7. Transistornetzwerk nach einem der vorherigen Ansprüche, **dadurch gekennzeichnet, dass** es eine Passivierungsschicht (cp) mit den Öffnungen umfasst, die den Nachweiszonen des Netzwerks entsprechen.

8. Transistornetzwerk nach einem der Ansprüche 1 bis 7, wobei jeder Transistor des Netzwerks Folgendes umfasst:
ein Substrat (w), das ein Gate (G) bildet,
eine dielektrische Schicht (1) auf dem Substrat,
ein Nanoröhrchen- oder Nanodraht-Halbleiterelement (NT), eine Source-Elektrode (S) und eine Drain-Elektrode (D), die auf der dielektrischen Schicht angeordnet sind, wobei das Substrat die Rückseite bildet und die Elemente Nanoröhrchen, Drain-Elektrode und Source-Elektrode die aktive Fläche bilden.

9. Netzwerk nach Anspruch 8, **dadurch gekennzeichnet, dass** es wenigstens zwei Transistorsubnetze (w₁, w₂) und einen Träger (SR) umfasst, auf dem die Subnetze montiert sind.

10. Netzwerk nach Anspruch 9, **dadurch gekennzeichnet, dass** die Subnetze auf dem Träger mit der Flipchip-Technik montiert sind.

11. Netzwerk nach Anspruch 10 in Kombination mit Anspruch 7, **dadurch gekennzeichnet, dass** der Träger (SR) Leiterbahnen (p₁, p₂) für den Anschluss des Gate von jedem der Subnetze (w₁, w₂) umfasst.

12. Netzwerk nach einem der Ansprüche 8-10, **dadurch gekennzeichnet, dass** ein Anschluss (6) des Gate in der aktiven Fläche durch ein Loch vorgesehen ist, das in die dielektrische Schicht graviert ist.

13. Elektronisches Bauelement zum Nachweisen von Analyten, das in einem flüssigen oder gasförmigen Medium arbeiten kann, das Folgendes umfasst: ein Netzwerk (R) von Feldeffekttransistoren nach einem der vorherigen Ansprüche, und Steuermittel (11, 12) zum Anlegen von Gate-Spannungen (Vg), Drain-Spannngen (V_{d}) und Source-Spannungen (Vₛ) an die Transistoren des Netzwerks, um für jeden der Transistoren eine Spannungsschwelle zu ermitteln, die einem Spannungswert zwischen Gate und Source entspricht, bei dem der Transistor durchlassend wird, Mittel (13) zum Speichern einer entsprechenden Leitungszustandsmatrix (M_{EC}), die Schwellenspannungen jedes der Transistoren umfasst, und Datenverarbeitungsmittel (14) zum Erhalten einer Nachweisinformation in Abhängigkeit von der Matrix.

14. Elektronisches Bauelement zum Nachweisen von Analyten nach Anspruch 13, **dadurch gekennzeichnet, dass** es außerdem ein Heizgerät umfasst, das eine Heißbetriebsart ermöglicht.

15. Elektronisches Nachweisbauelement nach einem der Ansprüche 13 bis 14, **dadurch gekennzeichnet, dass** die Steuermittel zum Liefern eines Maßes für das Gefälle (g) der Variation von Strom in Abhängigkeit von der Spannung konfiguriert sind, die zwischen Gate und Source für jeden der durchlassend gewordenen Transistoren angelegt werden, wobei die Gefälle der Transistoren in der Leitungszustandsmatrix (M_{EC}) gespeichert werden und die Datenverarbeitungsmittel (13) so konfiguriert sind, dass sie eine Analytenkonzentrationsinformation von den Gefällen erzeugen.

16. Elektronisches Nachweisbauelement nach einem der Ansprüche 13 bis 15, **dadurch gekennzeichnet, dass** die Datenverarbeitungsmittel (14) ein oder mehrere Referenzmatrizen und Mittel zum Vergleichen zwischen einer Leitungszustandsmatrix und den Referenzmatrizen umfassen.
